Europäisches Patentamt

European Patent Office

Office européen des brevets

(11) Publication number: **0 237 657**
**A1**

## (12) EUROPEAN PATENT APPLICATION

(21) Application number: **86301825.5**

(22) Date of filing: **13.03.86**

(51) Int. Cl.⁴: **B29C 65/36 , C09J 7/02 ,**
**A47G 27/04 , B29C 65/50**

(43) Date of publication of application:
**23.09.87 Bulletin 87/39**

(84) Designated Contracting States:
**AT BE CH DE FR GB IT LI LU NL SE**

(71) Applicant: **Nakano, Tsugo**
**26-11,Miyama 5-chome**
**Funabashi-shi Chiba-ken 274(JP)**

(72) Inventor: **Nakano, Tsugo**
**26-11,Miyama 5-chome**
**Funabashi-shi Chiba-ken 274(JP)**

(74) Representative: **Gilmour, David Cedric**
**Franklyn et al**
**POTTS, KERR & CO. 15 Hamilton Square**
**Birkenhead Merseyside L41 6BR(GB)**

(54) A method of seaming for bonding carpet strip and tape therefor.

(57) An improved method of seaming to bond carpet strips (3) and a composite adhesive tape used for this purpose comprising a substrate layer (1), and a hot-melt type adhesive layer (20,22,22A) containing therein a high frequency inductor powder (20A,22). Alternatively provided is a composite adhesive tape comprising a substrate layer (1) an electrically conductive metal foil (21,21A) extending over said substrate layer (1) and a hot-melt type adhesive layer - (20,22,22A) coated over said metal foil (21,21A)- .Induction heat is generated (4) from the conductive powder (20A,22) or the electrically conductive metal foil (21,21A) to melt the hot-melt type adhesive layer (20,22,22A) so that the carpet strips (3) are bonded together. Further provided is a composite adhesive tape having a tackifier layer (7,7A) extending substantially parallel to said adhesive layer (20,22,22A) for tacking either one of said carpet strip (3) temporarily in position.

FIG. 2

FIG. 5

# A METHOD OF SEAMING CARPET STRIPS AND A COMPOSITE ADHESIVE TAPE FOR USE THEREIN

The present invention relates to a method of seaming for bonding carpet strips together and a composite adhesive tape or arrangement or device for use in such method.

In recent years, it has become popular to cover the floor of a relatively large room, such as an office room or a dining-living area of a house, entirely with a carpet. When the area of the floor to be covered with a carpet is large and cannot be covered by a single carpet strip, it is a common practice to cover the floor with a plurality of carpet strips which are placed adjacently with the edges jointed together to form a generally flat and contiguous carpet surface. In the prior art method, the joining of individual carpet strips has been effected manually by stitching or adhesion of the edges of the adjacent carpet strips. However, such a manual operation requires high degree skill of the operator in addition to the expenditure of considerable time and expense.

With the aim to simplifying the operation of joining carpet strips, there has been proposed a back-up adhesive tape coated with a heat-sensitive adhesive, such as a thermoplastic or thermosetting adhesive composition, on which the reverse sides of the carpet strips to be joined are placed and then heat is applied using an electrical iron or other heating means from the obverse surface of the carpet strips to melt or set the adhesive. However, the surface areas of the carpet strips being engaged by the high temperature heating means are prone to being damaged during the heat-bond seaming step. This tendency can lead to severe damage, or destruction when the carpet strips are made of a material which has a poor heat-resistance property, for example, polyacrylate base synthetic fibres. In order to reduce the extent of damage caused by high temperature processing, attempts have been made to apply heat from the back side of the adhesive tape, i.e. from the side free of adhesive. However, such a process is troublesome in manipulating a large joined carpet in a limited space, i.e. on the floor which is to be covered over the whole area by the joined carpet. In addition, care must be taken so as not to contact the reverse or back side of the carpet strips with the heating means when such reverse side or backing is made of a material which has poor heat-resistance characteristics in order to eliminate or minimise the risk of the fibrous properties of the fibres constituting the carpet material being lost or damaged by melting or fusing thereof due to heating.

Another frequently performed seaming process comprises the steps of placing the carpet strips to be joined and an adhesive tape in the proper relative positions, turning up the marginal portions of the carpet strips which have been first placed in situ to expose the adhesive layer of the adhesive tape, heating the adhesive layer to melt the adhesive, turning back the marginal portions of the carpet strips again onto the surface of the adhesive layer which is now in the molten state, and pressing the carpet strips to be secured by the adhesive tape. However, this process involves cumbersome operations and requires precise positioning and repositioning of the carpet strips relative to the adhesive joining tape.

Japanese Patent Publication No. 3422/1977 discloses an adhesive tape in which a resistor wire is embedded in the adhesive layer so that ohmic heating is utilized to melt the adhesive. However, the construction of the adhesive tape is complicated and special equipment is needed for the practical use of such a tape, leading to considerable increase in cost.

Accordingly, it is a primary object of the present invention to overcome or minimise the aforementioned disadvantages of the prior art method and adhesive tapes used therein.

More specifically, it is an object of the invention to provide an improved method of joining carpet strips without impairing the carpet strips by a simple operation without the need of special equipment or skillful operation.

A further object of the invention is to provide an inexpensive composite adhesive tape which may be used in performing the method of the present invention.

A still further object of the invention is to provide a composite adhesive tape for use in the method of the invention which is provided with means for facilitating easy positioning of the carpet strips thereon.

Another object of the invention is to provide such a composite adhesive tape having means for firmly adhering the edges of adjacent or abutting carpet strips.

The present invention solves the previous problems by providing a method of seaming to bond carpet strips comprising the steps of placing the carpet strips so that the edges thereof are adjacent or abut each other, applying a composite adhesive tape on the reverse sides of the adjacent or abutting carpet strips, the composite adhesive tape including a substrate and an adhesive layer; said adhesive layer including an adhesive and an inductor powder mixed in the adhesive layer or including an adhesive coated on an electrically conductive metal foil; and applying an alternating magnetic field of high frequency from the obverse side of the composite adhesive tape to generate induction heat to melt the adhesive so that the contiguous marginal portions of the carpet strips are joined together by the back-up composite adhesive tape.

According to a further important aspect of the invention, there is provided a composite adhesive tape suited for use in the aforementioned method, which comprises a substrate layer and a hot melt type adhesive layer containing therein a high frequency inductor powder for generating induction heat when placed in an alternating magnetic field of high frequency.

According to another important aspect of the invention, there is provided a composite adhesive tape suited for use in the aforementioned method, which comprises a substrate layer, an electrically conductive metal foil extending over the substrate layer for generating induction heat when placed in an alternating magentic field of high frequency, and a hot-melt type adhesive layer coated over said metal foil.

A composite adhesive tape having a tackifier layer or tacky means extending parallel to the adhesive layer initially for securing carpet strip temporarily for positioning purpose is also included in the scope of the invention.

The invention will be described further, by way of example, with reference to the accompanying drawings, in which:

Fig. 1 is a perspective view, partly broken away, showing a portion of an embodiment of a composite adhesive tape according to the invention;

Fig. 2 is an exploded sectional view illustrating schematically performance of the method of the invention;

Fig. 3 is a schematic elevational view illustrating performance of the method of the invention;

Fig. 4 is a part sectional perspective view on enlarged scale illustrating another embodiment of the invention;

Fig. 5 is an exploded sectional view illustrating a further embodiment of the invention;

Fig. 6 is a perspective view, partly broken away, showing a portion of a still further embodiment of composite adhesive tape according to the invention;

Fig. 7 is a perspective view, partly broken away, showing a portion of a yet further embodiment of composite adhesive tape according to the invention;

Fig. 8 is a sectional view illustrating another embodiment of composite adhesive tape according to the invention;

Fig. 9 is a plan view showing a portion of the embodiment of Fig. 8;

Fig. 10 is a schematic sectional view illustrating performance of the method of the invention using the composite adhesive tape as shown in Figs. 8 and 9;

Fig. 11 is a sectional view illustrating another embodiment of the composite adhesive tape according to the invention;

Fig. 12 is a plan view illustrating a portion of the embodiment of Fig. 8;

Fig. 13 is a sectional view illustrating another embodiment of composite adhesive tape according to the invention.

The present invention will now be described in detail by referring to presently preferred embodiments thereof shown in the appended drawings in which like parts are denoted by the same reference numerals.

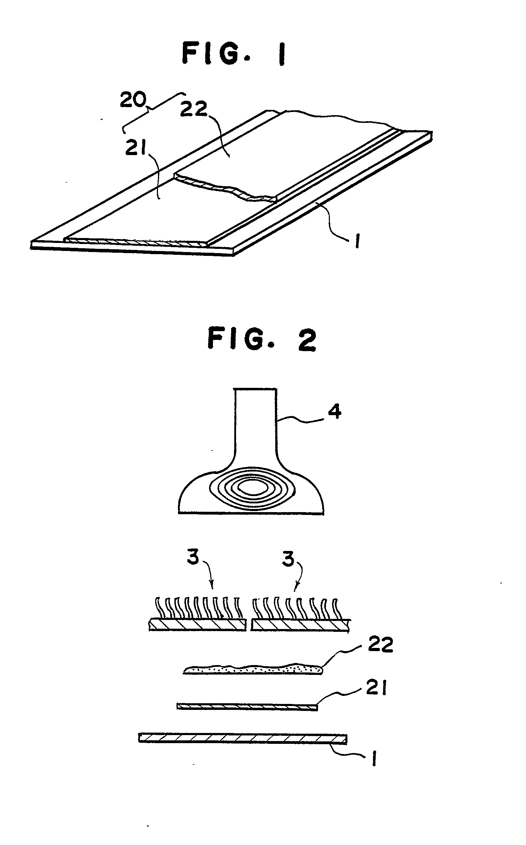

Referring first to Figs. 1 to 3, a substrate 1 is provided in the form of a web of a material which has a strength high enough for resisting the tension as may be applied between joined carpet strips 3. Examples of the materials which may be used as the substrate 1 in the composite adhesive tape of the invention are woven or non-woven fabrics, paper, plastics material sheets and woven or non-woven cloth of glass fibres.

An induction heating means or medium 21 for generating heat when placed in an alternating magnetic field of high frequency is firmly adhering to the substrate 1. The inductive or induction heating medium 21 in this embodiment is a metal foil which generates heat due to eddy-current loss or hysteresis loss when placed in or subjected to an alternating magnetic field of high frequency. Examples of metal foil usable for such purpose are iron, cobalt, nickel, aluminium and stainless steel foil.

A hot-melt type adhesive layer 22 is coated on the induction heating medium or metal foil 21 (to form what might be viewed as an inductive heating medium and adhesive combination 20). Either a thermoplastic or a thermosetting adhesive composition may be used as the adhesive. In order to prevent the carpet material from being damaged, it is desirable for the adhesive to be melted at a temperature of not higher than 200°C, more preferably within the temperature range of from 90° to 120°C -particularly when carpet strips made of polyacrylate base fibres are joined together.

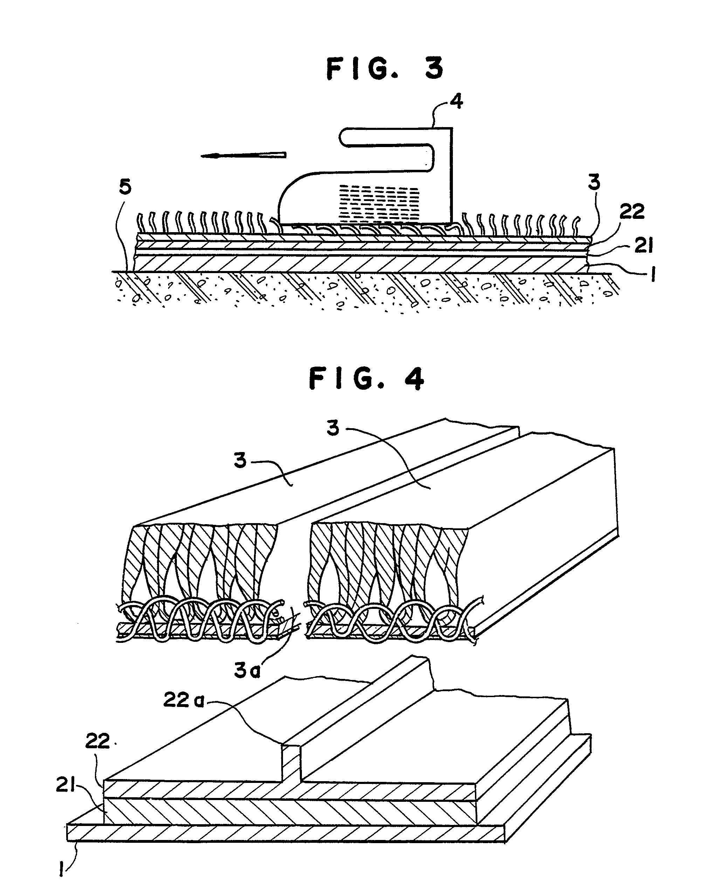

As will be seen from Figs. 2 and 3, the method of the invention is carried out as follows. The carpet strips 3 to be joined together are placed on the composite adhesive tape including the adhesive layer 22, the metal foil 21 and the substrate layer 1 so that the edges of the strips 3 engage or abut with each other. Then, an induction heating apparatus 4 for establishing an alternating magnetic field of high frequency is slidingly moved on the surface of the joined marginal portions of the strips along the longitudinal direction of the back-up composite adhesive tape, whereupon induction heat is generated in the metal foil 21 and transmitted to the adhesive layer 22 to melt the same. When the apparatus 4 is moved to a remote position, the molten adhesive cools spontaneously and becomes solidified to fix or bond the reverse (underneath) sides of the carpet strips 3 firmly in position. Since the adhesive layer 22 is melted by the induction heating apparatus 4 which is not itself heated and thus has a cold or a substantially non-heated carpet-engaging surface, the carpet strips 3 can be easily joined without being damaged by heat as they are placed in situ on the surface of a floor 5 - as shown in Fig. 3.

Referring now to Fig. 4 showing another embodiment of the composite adhesive tape of the invention, a continuous protrusion 22a of the adhesive extends from the main adhesive layer 22 along the longitudinal direction of the tape. By the use of this embodiment, the edges of the engaging carpet strips 3 are stuck by solidified adhesive upon carrying out the method so that removal of piles and straying fibre strings from the jointed portions of the carpet strips can be effectively prevented without any further processing. An additional advantage provided by the protrusion 22a resides in that the positioning of the carpet strips is made easier since the substantially straight protrusion 22a extending substantially along centre of the tape serves as a positioning rib, so that accurate positioning may be achieved simply by allowing the opposing edges 3a of the carpet strips to abut against the rising sides of the protrusion 22a. Although the protrusion 22a in this embodiment is continuous, a series of discontinuous protrusions may be arranged in a row.

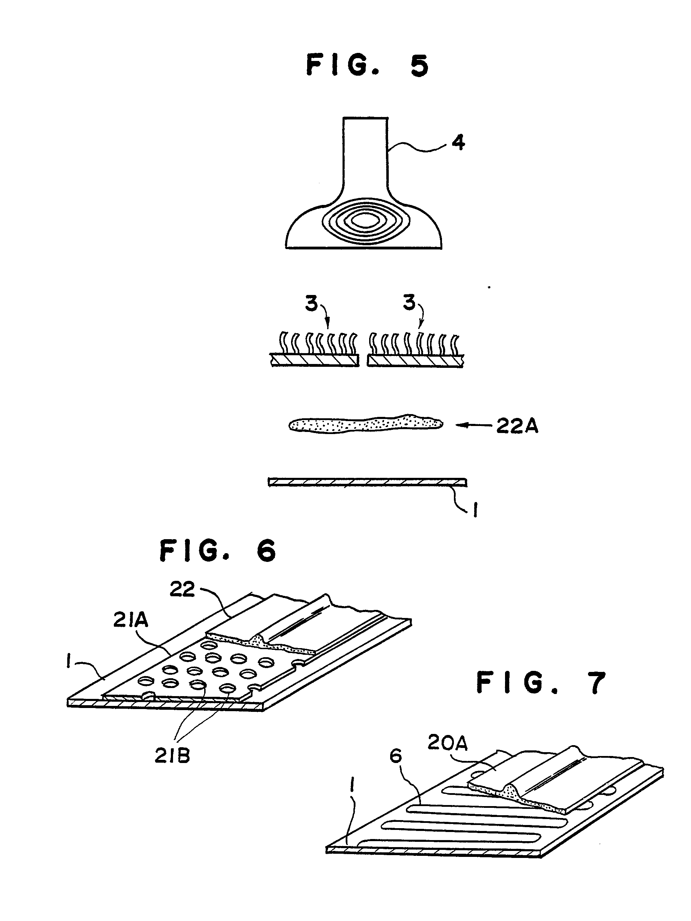

Fig. 5 schematically illustrates, in an exploded view, a further embodiment of the invention, wherein an adhesive layer 22A (20A) comprises a mixture of a heat-sensitive adhesive and a conductive powder (forming an adhesive-conductive powder combination layer 20A) is coated on the substrate 1. The adhesive layer 22A is prepared by mixing fine powders of a conductive or inductive material, such as iron, cobalt, nickel, aluminium, carbon or graphite, in a heat-senstive adhesive composition. The particle shape of the conductive powder is not critical, but it is preferred that individual powder particles have generally flat flaky shapes in order to reduce the time expended in induction heating. Detailed information of the powder particles having generally flat flaky shapes may be had from Japanese Patent Publication No. 14171/1973. In order to prevent the heat-sensitive adhesive from being heated excessively, particles of a heat absorbing material, such as a wood metal, ammonium sulfate or iron sulfide, taught by Japanese Patent Publication No. 16971/1973 may be mixed in the adhesive layer 20A. The subject matter of the two mentioned preceding Japanese Patent Publications is to be taken as incorporated herein by reference.

The adhesive layer 22A of this embodiment may have a central protrusion extending continuously or intermittently along the longitudinal direction of the tape, similarly as in the embodiment shown in Fig. 4.

Although a composite adhesive tape including a substrate and an adhesive layer is used in each of the aforementioned three embodiments and the following embodiments, the substrate, the adhesive layer and metal foil may be combined from individual components at the working site as will be understood by referring to Figs. 2 and 5 and considering the layers as separate components.

Another embodiment of the composite adhesive tape of the invention is shown in Fig. 6, wherein a metal foil 21A is made of a punched or perforated metal film. By the use of this alternative adhesive tape, molten adhesive 22 fills the punched holes 21B so that the tensile strength of the finished jointed portion is considerably increased.

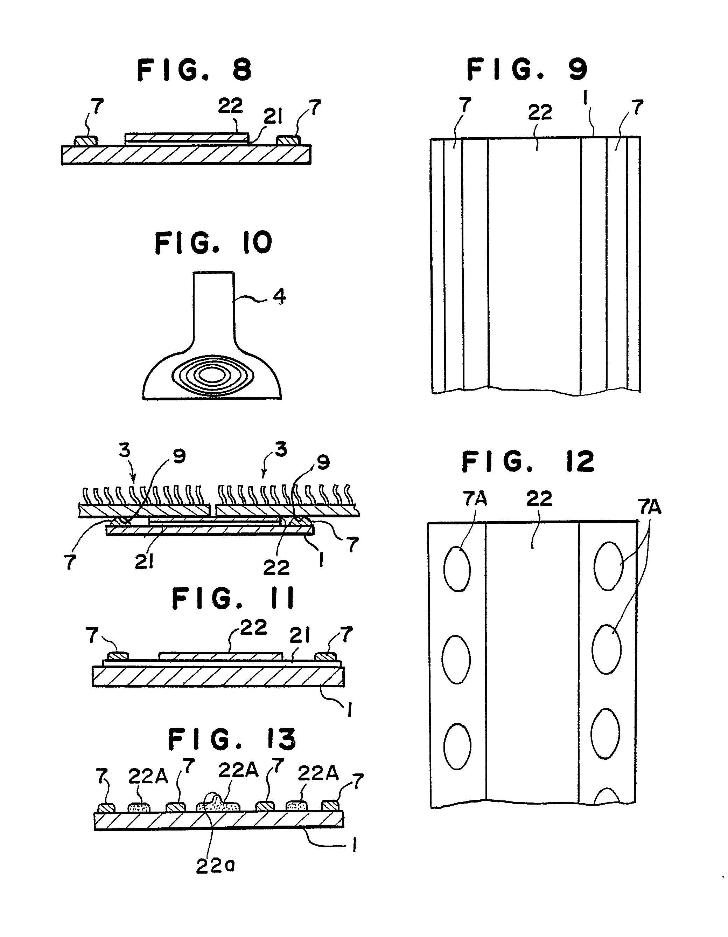

In a further embodiment shown in Fig. 7, reinforcing glass fibres 6 are disposed on the substrate 1. A continuous string or thread of glass fibre may be disposed in the zig-zag form or a plurality of chopped glass fibres may be disposed on the substrate 1. Although glass fibres may be oriented randomly, it is desirable that the fibres be oriented in a direction transverse to the longitudinal direction of extension of the tape in order to exhibit the effect of increasing the tensile strength resisting forces acting to otherwise separate the joined strips. It is recommended that glass fibres are spread over the substrate and then the adhesive 20A is coated thereover so that the glass fibres are embedded in the adhesive coating.

According to a further important aspect of the invention, tacky or tackifier layers 7 extends substantially parallel to the adhesive layer 22, as shown in Figs. 8 and 9. Each of the tackifier layers 7 is made of a known pressure-sensitive adhesive and serves as a tentative or initial tacking means for positioning the carpet strip in situ prior to hot-melting the adhesive for joining carpet strips more permanently. The adhesive or tackifying power of this tackifier layer may be such that easy positioning and re-positioning of the carpet strip is permissible.

The method of joining carpet strips by the use of this embodiment will be described. As shown in Fig. 10, carpet strips 3 are placed on the adhesive tape so that the edges thereof abut with each other. In this condition, the marginal portions of respective strips 3 are placed over the adhesive layer 22 and the portions denoted by 9 are tacked tentatively by the tackifier layer 7 so that both strips 3 may be held in position without displacement during the subsequent "hot-melt" step. The following procedure is similar to that in the preceding embodiments.

The embodiment shown in Fig. 12 is provided with a plurality of spots of tackifying material arranged at both sides of the adhesive layer 22 in a row of separated islands. Re-positioning of tentatively tacked carpet strips is made easier by such arrangement.

The embodiment of the composite adhesive tape shown in Fig. 13 has three adhesive layers 22A composed of a hot-melt type adhesive and electrically conductive induction powder mixed therein, the central one layer being provided with protrusion 22a, and four tackifier layers 7 disposed between adhesive layers and at outside of the two of the adhesive layers.

Although the invention has been described by referring to preferred embodiments thereof, many changes and modifications may be made within the spirit and scope of the invention. For example, the embodiments shown in Figs. 8 to 11 may be modified so that the metal foil layer 21 is made of a film, and the embodiments shown in Figs. 8 to 13 may be provided with reinforcing glass fibres to increase the tensile strengths thereof. The high frequency alternating magnetic field may even be applied to the tape from the direction of the normally in-use underneath side of the carpet strips or other floor coverings or materials which may be bonded using the method and tape or arrangement of the present invention.

The reference numerals in parenthesis in the following claims should not be regarded as in any way limitative thereof.

## Claims

1. A method of seaming carpet strips (3) or the like comprising the steps of placing the carpet strips (3) so that the edges thereof are adjacent or abut each other and applying a composite adhesive tape to the reverse or normally underneath sides of the adjacent or abutting carpet strips (3) characterised by the feature that the tape which is applied includes a substrate layer (1) and an ahesive layer (20,22,22A) containing therein inductor means comprising a high frequency inductor powder (20A,22) or a substrate layer (1) and an electrically conductive metal foil (21,21A) extending over said substrate layer (1) and an adhesive layer (22) applied over said metal foil (21,21A) and is applied on the reverse or underneath sides of the adjacent or abutting carpet strips (3), and that an alternating magnetic field of high frequency is applied (4) to said inductor powder (22A) or metal foil (21,21A), preferably from the obverse or normally upper side of said composite adhesive tape, to generate induction heat sufficient to melt the adhesive (20,22,22A) so that the contiguous marginal portions of the carpet strips are joined together by the adhesive tape upon cooling of said adhesive - (20,22,22A).

2. A composite adhesive tape comprising a substrate layer (1), and a hot-melt type adhesive layer and inductor or inductive material means in the form of either a high frequency inductor powder (22A) contained within the adhesive (20,22,22A) or an electrically conductive metal foil (21,21A) extending over said substrate layer (1) and having a hot melt type adhesive layer (22) thereover, said powder (22A) or foil (21,21A) being for generating induction heat sufficient to melt the adhesive - (20,22,22A) when placed in an alternating magnetic field of high frequency.

3. A tape as claimed in claim 2 wherein said substrate layer (1) is selected from the group comprising woven cloth, non-woven cloth, paper, plastics sheet and glass fibre cloth.

4. A tape as claimed in claim 2 or 3 wherein said hot-melt type adhesive layer (20,22,22A) is of a thermoplastic adhesive.

5. A tape as claimed in any of claims 2 to 4, wherein said hot-melt type adhesive layer - (20,22,22A) is of a thermosetting adhesive.

6. A tape as claimed in any of claims 2 to 5 wherein said adhesive layer (22) has a central protrusion or rib (22A) extending along the longitudinal direction of the composite adhesive tape.

7. A tape as claimed in any of claims 2 to 6 wherein said adhesive layer (20, 22,22A) has a row of reinforcing glass fibres (6) each extending transverse to the longitudinal direction of said composite adhesive tape.

8. A tape as claimed in any of claims 2 to 5 wherein said conductor powder (22A) is iron, cobalt, nickel cobalt, aluminium, carbon or graphite powder.

9. A tape as claimed in any of claims 2 to 8 wherein said metal foil (21,21A) is an iron, cobalt, nickel, aluminium or stainless steel foil.

10. A tape as claimed in any of claims 2 to 9, wherein further comprising one or more tackifier or tacky layers (7,7A) extending substantially parallel to said adhesive layer (22) on one or both sides of said adhesive layer (22) for tacking respectively either one or both of said carpet strip or strips (3) temporarily or tentatively in position prior to bonding together by melting or said adhesive layer - (20,22,22A)

11. A tape as claimed in any of claims 1 to 10, wherein said tacky layer or layers (7,7A) is or are of a pressure-sensitive adhesive.

12. A tape arrangement generally as claimed in any of claims 1 to 11, wherein instead of being a composite device, the constituent parts (1: 20A,22,22A:20A,22/21,21A) (1: 20,21,22,22A: 22,20A,21,21A)may be provided as separate components such as to be disposable in the required arrangement and combinable in situ.

# FIG. 1

# FIG. 2

# FIG. 3

4

5

3

22

21

1

# FIG. 4

3

3

3a

22a

22

21

1

# FIG. 5

4

3    3

← 22A

I

# FIG. 6

22

21A

I

21B

# FIG. 7

20A

6

I

# FIG. 8

# FIG. 9

# FIG. 10

# FIG. 12

# FIG. 11

# FIG. 13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 123 305 (KRZESZOWSKI) <br><br> * Whole document * <br><br> --- | 1,2,8, 9,12 | B 29 C 65/36 <br> C 09 J 7/02 <br> A 47 G 27/04 <br> B 29 C 65/50 |
| Y | DE-A-1 926 943 (W.R. GRACE & CO.) <br> * Claim 1 * | 1,2 | |
| A | | 3-5,8 | |
| | --- | | |
| Y | GB-A-1 507 851 (DECO COATINGS CORP.) <br> * Page 2, lines 18-42; page 3, lines 106-119 * | 1,2 | |
| A | <br> --- | 3,4,7, 9 | **TECHNICAL FIELDS SEARCHED (Int. Cl.4)** <br><br> A 47 G |
| A | DE-C-3 307 502 (PILLER) <br> * Claim 1 * <br><br> --- | 1,2,12 | |
| A | GB-A- 842 474 (DURIE & MILLER LTD.) <br> * Figures 1,2 * <br><br> --- | 1,3-6 | |
| A | FR-A-2 501 708 (BRUN) <br> * Figure 2; page 4, lines 1-4 * <br><br> ---     -/- | 10 | |

The present search report has been drawn up for all claims

| Place of search | Date of completion of the search | Examiner |
|---|---|---|
| THE HAGUE | 12-11-1986 | BEUGELING G.L.H. |

| DOCUMENTS CONSIDERED TO BE RELEVANT | | | Page 2 |

| Category | Citation of document with indication, where appropriate, of relevant passages | Relevant to claim | CLASSIFICATION OF THE APPLICATION (Int. Cl.4) |
|---|---|---|---|
| A | US-A-3 711 349 (SNYDER et al.)<br><br>* Column 2, lines 7-51; figure 1 *<br><br>----- | 1,10, 11 | |
| | | | **TECHNICAL FIELDS SEARCHED** (Int. Cl.4) |

The present search report has been drawn up for all claims

| Place of search | Date of completion of the search | Examiner |
|---|---|---|
| THE HAGUE | 12-11-1986 | BEUGELING G.L.H. |